# EUROPÄISCHE PATENTSCHRIFT

(11) **EP 1 630 304 B1**
(45) Veröffentlichungstag und Bekanntmachung des Hinweises auf die Patenterteilung: **04.06.2008**
(21) Anmeldenummer: 05018396.1
(22) Anmeldetag: 24.08.2005
(51) Int. Cl.: E03B 7/08

(54) **Wasseranschlussarmatur**
Water supply fitting
Armature de connexion pour installation de préparation d'eau

(30) Priorität: 25.08.2004 DE 202004013312 U
(43) Veröffentlichungstag der Anmeldung: 01.03.2006
(73) Patentinhaber: Reich KG, Regel- und Sicherheitstechnik, 35713 Eschenburg-Wissenbach (DE)
(72) Erfinder: Schaab, Armin, 35713 Eschenburg-Wissenbach (DE)
(74) Vertreter: Patentanwälte Hofstetter, Schurack & Skora

(56) Entgegenhaltungen:
- DE-A1- 3 717 705
- GB-A- 2 310 244
- US-A- 6 101 766
- US-A1- 2004 107 994
- US-A1- 2004 112 432

## Beschreibung

Die vorliegende Erfindung betrifft eine Wasseranschlussarmatur, insbesondere für den Anschluss an ein Wassernetz eines Wohnwagens, Caravans oder Motorcaravans, mit einem an das Wassernetz anschließbaren Druckminderer und einem damit flüssigkeitsleitend verbundenen Magnetventil.

Aus Gründen des Komforts werden in Wohnwagen, Caravans und Motorcaravans in zunehmendem Maße Einrichtung eingebaut, die das Einspeisen von Trinkwasser aus dem örtlichen, äußeren Wassernetz ermöglichen und so ein wiederholtes Befüllen des Wasservorratstanks überflüssig machen. Bei neueren Systemen erfolgt eine Einspeisung direkt in das Leitungssystem, ohne dass der Tank gefüllt wird. Jedoch muss in jedem Fall eine Reduzierung des Wassernetzdruckes von ca. 4 - 5 bar auf ca. 1 - 2 bar erfolgen, da die Wohnwagen-, Caravan- oder Motorcaravanwassersysteme nur für Betriebsdrücke von 1,5 bis maximal 3 bar ausgelegt sind.

Dies geschieht üblicherweise mittels eines Druckminderers, der in der Regel in einer Versorgungsklappe innerhalb der Außenwand des Wohnwagens, Caravans oder Motorcaravans untergebracht ist und einerseits einen Anschluss an das äußere Wassernetz aufweist, andererseits eine feste Verbindung zum inneren Wassersystem des Wohnwagens oder Caravans besitzt. In der Verbindung zum Druckminderer wird in der Regel ein Rückschlagventil derart eingebaut, dass es beim Betrieb ohne äußeren Wassernetzanschluss nicht zum Austreten von Wasser aus dem Anschluss kommt. Teilweise bildet das Rückschlagventil mit dem Druckminderer eine Baugruppe.

In der Praxis treten jedoch hin und wieder Leckagen des Leitungssystems auf. Dies kann z.B. durch eine Vorschädigung durch Frost oder durch Lockerung der Verbindung der verwendeten Schläuche an den Schlauchtüllen verursacht werden. Während beim autarken Betrieb des Wohnwagens oder Caravans mittels Vorratstank und Tauchpumpe lediglich während der Einschaltzeit der durch einen Schalter in der Wasserentnahmearmatur eingeschalteten Pumpe Wasser an den Leckstellen austreten kann, kommt es beim Anschluss an das äußere Wassernetz regelmäßig zu erheblichen Wasserschäden an den im wesentlichen aus Holzprodukten bestehenden Fahrzeugaufbauten.

Um diese Schäden zu verhindern, setzt man in bekannter Weise zusätzlich zum Druckminderer ein stromlos geschlossenes Magnetventil ein, welches ebenfalls über die in den Wasserentnahmearmaturen vorhanden Schalter beim Öffnen der Armatur angesprochen (geöffnet) wird. Ebenso kann das Magnetventil über einen separaten Druckschalter im Wassersystem des Caravans oder Motorcaravans bei Erreichen eines gewissen Druckes geschlossen werden. Dadurch wird gewährleistet, dass im Falle einer Leckage nicht unbegrenzt Wasser ausströmen kann, sondern nur das im inneren Leitungssystem des Wohnwagens, Caravans oder Motorcaravans vorhandene Wasser. Hierzu kann das Magnetventil vor oder hinter dem Druckminderer angeordnet sein. Sinnvoller Weise aber nicht innerhalb des Wohnwagens, Caravans oder Motorcaravans.

Nachteilig an dieser Ausführungsform ist jedoch, dass aufgrund der Bauform von Magnetventilen und der gegebenen Einbausituation die Entleerung derselben nicht ausreichend sichergestellt werden kann. Dies führt bei Frost zur Zerstörung und der damit verbundenen Leckage des Magnetventils. Damit ist die oben beschriebene Ausführung in Regionen mit Frostgefahr nicht einsetzbar. Zudem erfordern die bekannten Systeme einen sehr hohen Montage- und Demontageaufwand.

Aus der DE 37 17 705 A1 ist eine sanitäre Einrichtung mit zumindest einer Toilette bekannt, von der aus eine Abwasserleitung zu einem Abwassersammeltank führt, der mit einem Feststofffilter und einer Rohrleitung zurück zu einer Toilette ausgebildet ist und eine zwischen Abwassersammeltank und Toilette angeordnete, mittels Druckluft beaufschlagbare Spülwasserpumpe aufweist. Dabei umfasst eine Spüleinrichtung für die Toilette eine Zuführleitung für die Spülflüssigkeit, wobei in der Zuführleitung ein Magnetventil als Sperrventil angeordnet sein kann.

Es ist Aufgabe der vorliegenden Erfindung, eine gattungsgemäße Wasseranschlussarmatur, insbesondere für den Einbau in Wohnwagen und Caravans, bereitzustellen, die einerseits eine schnelle und einfache Montage und Demontage erlaubt und andererseits gegenüber Frostschäden gesichert werden kann.

Gelöst wird diese Aufgabe durch eine Wasseranschlussarmatur mit den Merkmalen des Anspruchs 1.

Vorteilhafte Ausgestaltungen sind in den Unteransprüchen beschrieben.

Eine erfindungsgemäße Wasseranschlussarmatur, insbesondere für den Anschluss an ein Wassernetz eines Wohnwagens, Caravans oder Motorcaravans, weist einen an das Wassernetz anschließbaren Druckminderer und damit flüssigkeitsleitend verbundenes Magnetventil auf, wobei das Magnetventil lösbar mit dem Druckminderer verbunden ist. Durch die Lösbarkeit von Magnetventil und Druckminderer kann das Magnetventil zum Beispiel bei Frostgefahr entfernt werden und an einem frostsicheren Platz aufbewahrt werden. Zudem ist eine einfache und schnelle Montage und Demontage möglich.

In einer vorteilhaften Ausgestaltung der Erfindung ist das Magnetventil und der Druckminderer mittels einer Kupplungsvorrichtung verbunden. Die Kupplungsvorrichtung kann dabei eine Steckkupplung sein, sie kann als Bajonettverschluss oder als Festkupplung mit Gewinde ausgebildet sein. Durch das Vorhandensein einer Kupplungsvorrichtung ist wiederum eine einfache und schnelle Montage und Demontage von Magnetventil und Druckminderer möglich. Des Weiteren kann die Kupplungsvorrichtung derart ausgebildet sein, dass die Verbindung der einzelnen Kupplungselemente nur in vorgegebener Weise möglich ist. Vorteilhafterweise ist dadurch gewährleistet, dass die Verbindung zwischen Magnetventil und Druckminderer immer in der richtigen Art und Weise erfolgt. Zudem ist es möglich, dass die Kupplungsvorrichtung verschließbar ist, so dass eine unbefugte Demontage nur sehr schwer möglich ist.

In einer weiteren vorteilhaften Ausgestaltung der erfindungsgemäßen Wasseranschlussarmatur sind das Magnetventil und der Druckminderer miteinander verschraubt. Diese lösbare Verbindungsart stellt eine kostengünstige Alternative zu der oben beschriebenen Kupplungsvorrichtung dar.

In einer weiteren vorteilhaften Ausgestaltung der Erfindung weist das Magnetventil eine elektrische Steckverbindung für den elektrischen Kontakt zu in Wasserauslaufarmaturen integrierten Schaltern und/oder zu einem im Wassernetz des Wohnwagens, Caravans oder Motorcaravans angeordneten Druckschalter auf. Damit ist es vorteilhafterweise möglich, auch den Auslöse- und Schließmechanismus des Magnetventils auf einfache Art und Weise von dem Wohnwagen, dem Caravan oder dem Motorcaravan zu lösen.

In einer weiteren vorteilhaften Ausgestaltung der Erfindung sind das Magnetventil, die wasserführenden Elemente des Magnetventils und die elektrischen Kontakte des Magnetventils in einem Gehäuse integriert. Neben der einfachen Handhabbarkeit des Magnetventils erfolgt durch das Gehäuse ein zusätzlicher Frost- oder Stoßschutz. Es ist aber auch möglich, dass das Gehäuse elektrisch beheizbar ist. Damit kann die erfindungsgemäße Wasseranschlussarmatur auch bei sehr niedrigen Temperaturen eingesetzt werden.

Weitere Einzelheiten, Merkmale und Vorteile der Erfindung sind in dem nachfolgend beschriebenen und zeichnerisch dargestellten Ausführungsbeispiel näher erläutert. Es zeigen:
- Figur 1: eine schematische Darstellung einer erfindungsgemäßen Wasseranschlussarmatur in nicht-montiertem Zustand; und
- Figur 2: eine schematische Darstellung der erfindungsgemäßen Wasseranschlussarmatur gemäß Figur 1 in montiertem Zustand.

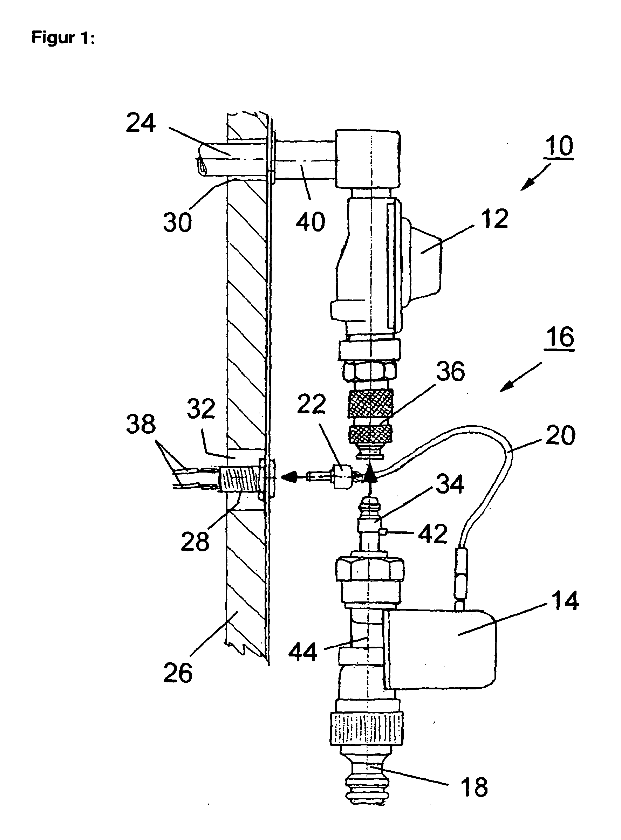

Figur 1 zeigt in einer schematischen Darstellung eine Wasseranschlussarmatur 10 in nicht-montiertem Zustand. Die Wasseranschlussarmatur 10 dient insbesondere für den Anschluss an ein Wassernetz 24 eines Wohnwagens, Caravans oder Motorcaravans. Sie besteht aus einem an das Wassernetz 24 anschließbaren Druckminderer 12 und einem damit flüssigkeitsleitenden Magnetventil 14. Dabei sind das Magnetventil 14 und der Druckminderer 12 mittels einer Kupplungsvorrichtung 16 miteinander lösbar verbunden. In dem dargestellten Ausführungsbeispiel besteht die Kupplungsvorrichtung 16 aus einer Steckkupplung mit einem Kupplungsanschlusselement 34 und einem entsprechenden Kupplungsaufnahmeelement 36. Des Weiteren weist das Kupplungsanschlusselement 34 einen Vorsprung 42 auf, der zur Einführung in eine entsprechende Ausnehmung des Kupplungsaufnahmeelements 36 dient. Eine derartige Ausgestaltung bewirkt, dass die Verbindung der Kupplungselemente 34, 36 nur in vorgegebener und vorbestimmter Weise möglich ist. Des Weiteren erkennt man, dass der Druckminderer 12 an seinem dem Magnetventil 14 gegenüberliegenden Ende einen Anschluss 40 an das Wassernetz 24 des Wohnwagens, Caravans oder Motorcaravans aufweist. Der Anschluss 40 greift dabei in eine Öffnung 30 einer Außenwand 26 des Wohnwagens, Caravans oder Motorcaravans ein.

Das Magnetventil 14 weist eine elektrische Steckverbindung bestehend aus einer von dem Magnetventil 14 wegführenden elektrischen Leitung 20 mit einem elektrischen Steckerelement 22. Das Steckerelement 22 ist derart ausgebildet, dass es in eine Steckeraufnahme 28, die in einer Öffnung 32 der Außenwand 26 ausgebildet ist, eingreift und somit den elektrischen Kontakt über die elektrischen Leitungen 38 zu in Wasserauslaufarmaturen integrierten Schaltern (nicht dargestellt) und/oder zu einem im Wassernetz 24 angeordneten Druckschalter (nicht dargestellt) herstellt.

Des Weiteren erkennt man, dass das Magnetventil 14 ein flüssigkeits- bzw. wasserleitendes Element 44 aufweist, wobei an dem dem Kupplungselement 34 gegenüberliegenden Ende ein Anschlusselement 18 für den Anschluss an das äußere bzw. örtliche Wassernetz ausgebildet ist. Das Anschlusselement 18 ist üblicherweise als Schlauchkupplung ausgebildet.

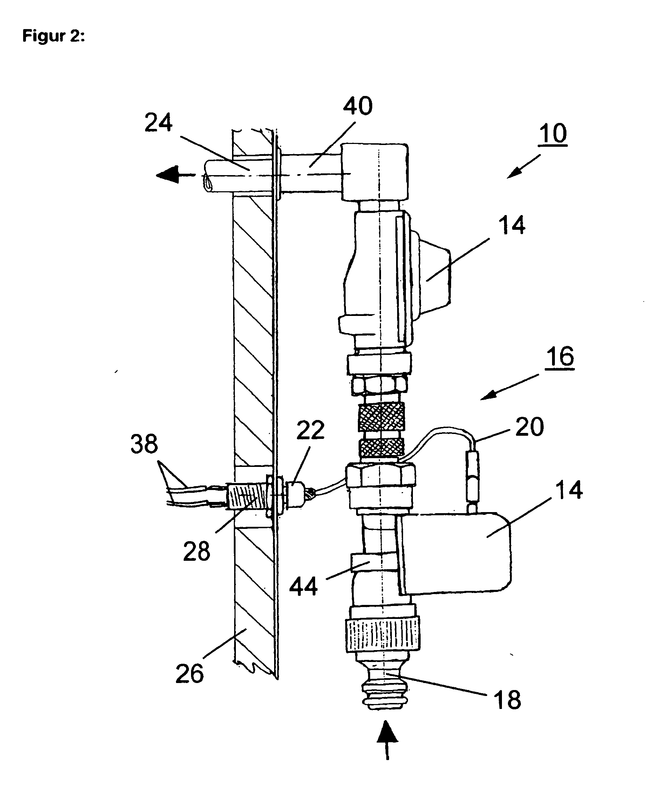

Figur 2 zeigt eine schematische Darstellung der Wasseranschlussarmatur 10 gemäß Figur 1 in montiertem Zustand. Die dargestellten schwarzen Pfeile zeigen dabei die Fließrichtung der Flüssigkeit bzw. des Wassers auf. Über das Anschlusselement 18, das flüssigkeitsleitende Element 44, die Kupplungsvorrichtung 16, den Druckminderer 12 sowie das Anschlusselement 40 gelangt Wasser von dem äußeren, örtlichen Wassernetz in das innere Wassernetz 24 des Wohnwagens, Caravans oder Motorcaravans. Der elektrische Kontakt des Magnetventils 14 zu den in den Wasserauslaufarmaturen integrierten Schaltern oder zu dem im Wassernetz 24 angeordneten Druckschalter erfolgt über die elektrische Steckverbindung 20, 22, 28,38.

In weiteren, nicht dargestellten Ausführungsbeispielen ist es möglich, dass die Wasseranschlussarmatur 10 eine Kupplungsvorrichtung aufweist, die als Bajonettverschluss oder als Festkupplung mit Gewinde ausgebildet ist. Des Weiteren ist es möglich, dass die Kupplungsvorrichtung 16 verschließbar ist. Schließlich kann in einer weiteren Ausführungsform das Magnetventil 14 und der Druckminderer 12 miteinander verschraubt sein. In einer weiteren, nicht dargestellten Ausführungsform sind das Magnetventil 14, die wasserführenden Elemente 18, 44, 34 des Magnetventils 14 und die elektrischen Kontakte des Magnetventils 14 in einem Gehäuse integriert, wobei das Gehäuse elektrisch beheizbar sein kann.

## Patentansprüche

1. Wasseranschlussarmatur, insbesondere für den Anschluss an ein Wassernetz (24) eines Wohnwagens, Caravans oder Motorcaravans, mit einem an das Wassernetz (24) anschließbaren Druckminderer (12) und einem damit flüssigkeitsleitend verbundenen Magnetventil (14),
**dadurch gekennzeichnet,**
**dass** das Magnetventil (14) lösbar mit dem Druckminderer (12) verbunden ist.

2. Wasseranschlussarmatur nach Anspruch 1,
**dadurch gekennzeichnet,**
**dass** das Magnetventil (14) und der Druckminderer (12) mittels einer Kupplungsvorrichtung (16) verbunden sind.

3. Wasseranschlussarmatur nach Anspruch 2,
**dadurch gekennzeichnet,**
**dass** die Kupplungsvorrichtung (16) eine Steckkupplung ist.

4. Wasseranschlussarmatur nach Anspruch 2,
**dadurch gekennzeichnet,**
**dass** die Kupplungsvorrichtung (16) als Bajonettverschluss ausgebildet ist.

5. Wasseranschlussarmatur nach Anspruch 2,
**dadurch gekennzeichnet,**
**dass** die Kupplungsvorrichtung (16) als Festkupplung mit Gewinde ausgebildet ist.

6. Wasseranschlussarmatur nach einem der Ansprüche 2 bis 5,
**dadurch gekennzeichnet,**
**dass** die Kupplungsvorrichtung (16) derart ausgebildet ist, dass die Verbindung der Kupplungselemente (34, 36) nur in vorgegebener Weise möglich ist.

7. Wasseranschlussarmatur nach einem der Ansprüche 2 bis 6,
**dadurch gekennzeichnet,**
**dass** die Kupplungsvorrichtung (16) verschließbar ist.

8. Wasseranschlussarmatur nach Anspruch 1,
**dadurch gekennzeichnet,**
**dass** das Magnetventil (14) und der Druckminderer (12) miteinander verschraubt sind.

9. Wasseranschlussarmatur nach einem der vorhergehenden Ansprüche,
**dadurch gekennzeichnet,**
**dass** das Magnetventil (14) eine elektrische Steckverbindung (20, 22, 28, 38) für den elektrischen Kontakt zu in Wasserauslaufarmaturen integrierten Schaltern und/oder zu einem im Wassernetz (24) angeordneten Druckschalter aufweist.

10. Wasseranschlussarmatur nach einem der vorhergehenden Ansprüche,
**dadurch gekennzeichnet,**
**dass** das Magnetventil (14), die wasserführenden Elemente des Magnetventils (14) und die elektrischen Kontakte des Magnetventils (14) in einem Gehäuse integriert sind.

11. Wasseranschlussarmatur nach Anspruch 10,
**dadurch gekennzeichnet,**
**dass** das Gehäuse elektrisch beheizbar ist.

## Claims

1. Water supply fitting, especially for the connection to a water supply (24) of a camper, a caravan or a motor caravan, including a pressure reducer (12) connectable to the water supply (24) and a solenoid valve (14) connected thereto in liquid conveying manner,
**characterized in that**
the solenoid valve (14) is detachably connected to the pressure reducer (12).

2. Water supply fitting according to claim 1,
**characterized in that**
the solenoid valve (14) and the pressure reducer (12) are connected by means of a coupling device (16).

3. Water supply fitting according to claim 2,
**characterized in that**
the coupling device (16) is a plug coupling,

4. Water supply fitting according to claim 2,
**characterized in that**
the coupling device (16) is formed as a bayonet lock.

5. Water supply fitting according to claim 2,
**characterized in that**
the coupling device (16) is formed as a fixed coupling with thread.

6. Water supply fitting according to anyone of claims 2 to 5,
**characterized in that**
the coupling device (16) is formed such that the connection of the coupling members (34, 36) is only possible in predetermined manner.

7. Water supply fitting according to anyone of claims 2 to 6,
**characterized in that**
the coupling device (16) is lockable.

8. Water supply fitting according to claim 1,
**characterized in that**
the solenoid valve (14) and the pressure reducer (12) are screwed with each other.

9. Water supply fitting according to anyone of the preceding claims,
**characterized in that**
the solenoid valve (14) has an electrical plug connection (20, 22, 28, 38) for the electrical contact to switches integrated in water drain fittings and/or to a pressure switch disposed in the water supply (24).

10. Water supply fitting according to anyone of the preceding claims,
**characterized in that**
the solenoid valve (14), the water conveying elements of the solenoid valve (14) and the electrical contacts of the solenoid valve (14) are integrated in a housing.

11. Water supply fitting according to claim 10,
**characterized in that**
the housing is electrically heatable.

## Revendications

1. Robinetterie pour l'alimentation en eau, en particulier pour le raccordement à un réseau d'eau (24) d'une roulotte, d'une caravane ou d'un camping-car, avec un réducteur de pression (12) raccordable au réseau d'eau (24) et une électrovanne (14) qui y est reliée de façon à conduire le liquide,
**caractérisée en ce que**
l'électrovanne (14) est reliée au réducteur de pression (12) de manière amovible.

2. Robinetterie pour l'alimentation en eau selon la revendication 1,
**caractérisée en ce que**
l'électrovanne (14) et le réducteur de pression (12) sont reliés au moyen d'un dispositif d'accouplement (16).

3. Robinetterie pour l'alimentation en eau selon la revendication 2,
**caractérisée en ce que**
le dispositif d'accouplement (16) est un accouplement à emboîtement.

4. Robinetterie pour l'alimentation en eau selon la revendication 2,
**caractérisée en ce que**
le dispositif d'accouplement (16) est formé en tant qu'emboîtement à baïonnette.

5. Robinetterie pour l'alimentation en eau selon la revendication 2,
**caractérisée en ce que**
le dispositif d'accouplement (16) est formé en tant qu'accouplement fixe avec filetage.

6. Robinetterie pour l'alimentation en eau selon l'une des revendications 2 à 5,
**caractérisée en ce que**
le dispositif d'accouplement (16) est formé de sorte que la jonction des éléments d'accouplement (34, 36) n'est possible que d'une manière prédéterminée.

7. Robinetterie pour l'alimentation en eau selon l'une des revendications 2 à 6,
**caractérisée en ce que**
le dispositif d'accouplement (16) est verrouillable.

8. Robinetterie pour l'alimentation en eau selon la revendication 1,
**caractérisée en ce que**
l'électrovanne (14) et le réducteur de pression (12) sont vissés l'un à l'autre.

9. Robinetterie pour l'alimentation en eau selon l'une des revendications précédentes,
**caractérisée en ce que**
l'électrovanne (14) présente une jonction électrique à fiche (20, 22, 28, 38) pour le contact électrique avec des interrupteurs, intégrés dans des robinetteries pour l'alimentation en eau et/ou avec un manostat, disposé dans le réseau d'eau (24)

10. Robinetterie pour l'alimentation en eau selon l'une des revendications précédentes,
**caractérisée en ce que**
l'électrovanne (14), les éléments conduisant l'eau de l'électrovanne (14) et les contacts électriques de l'électrovanne (14) sont intégrés dans un boîtier.

11. Robinetterie pour l'alimentation en eau selon la revendication 10,
**caractérisée en ce que**
le boîtier peut être chauffé électriquement.
